# EUROPEAN PATENT SPECIFICATION

(11) **EP 3 657 959 B1**
(45) Date of publication and mention of the grant of the patent: **28.01.2026**
(21) Application number: 18750573.0
(22) Date of filing: 27.07.2018
(51) Int. Cl.: A23D 7/005, A23L 7/10, A23D 9/007, A23L 33/20, A23L 33/22

(54) **FAT-BASED FILLING COMPRISING MICRONIZED BRAN**
FETTBASIERTE FÜLLUNG MIT MIKRONISIERTER KLEIE
GARNITURE À BASE DE GRAISSE COMPRENANT DU SON MICRONISÉ

(30) Priority: 27.07.2017 EP 17183522
(43) Date of publication of application: 03.06.2020
(73) Proprietor: Cargill, Incorporated, Wayzata, MN 55391 (US)
(72) Inventor: FOUCAULT, Michael, 1800 Vilvoorde (BE); KEGELAERS, Yves, 1800 Vilvoorde (BE); MOSSEL, Richard, 1800 Vilvoorde (BE)
(74) Representative: Cargill IP Department
(86) International application number: PCT/US2018/044056
(87) International publication number: WO 2019/023558

(56) References cited:
- WO-A1-2016/102315
- WO-A1-2017/167966
- DE-A1- 2 345 806
- US-A- 5 356 644
- US-A1- 2003 194 473
- US-A1- 2015 037 469
- DATABASE WPI Week 198314, 1983 Derwent World Patents Index; AN 1983-33925K, XP002773445

## Description

### TECHNICAL FIELD

The present invention relates to a fat-based filling comprising micronized wheat bran, in particular to a sugar reduced fat-based filling, a process for making such fillings and their use in food applications. The present invention further relates to the use of micronized wheat bran, to reduce sugar in a fat-based filling.

### BACKGROUND

Diseases linked to the diet, like obesity or cardio-vascular diseases, attract more and more the attention of the authorities, of the media and of the population. The authorities of several countries start to issue regulations to force the limitation of sugar in the diet.

In this context, consumers of fat-based fillings, such as chocolate confectionary fillings, are more and more conscious of the important amount of sugar present in chocolate products and confectionary fillings. Therefore, manufacturers of fat-based fillings, are seeking to find solutions to replace sugar in fat-based fillings, without affecting the properties of fat-based fillings.

Sugar has important functionalities in fat-based fillings. The most important role of sugar is to give a sweet taste to the fat-based filling. Reduction of the amount of sugar in the fat-based filling and replacement with other ingredients can negatively influence the taste of the end products. The intensity of the sweet taste or the moment of perception of the sweet taste can be modified, leading to end products with different taste profile. Other important functionalities of sugar in the fat-based filling are mouthfeel and flowability.

High-intensity sweeteners are currently used in sugar replacement efforts. However their use often brings along a different flavour release and is often accompanied with the perception of off taste. Polyols are also used for sugar replacement, however the use of higher dosages is limited due to undesired side effects, such as laxation. Finally, bulking agents like starches or fibres are also used to replace part of the sugar. With these ingredients, some aftertaste might also be noted and the texture of the end product might be affected.

Prior art shown below relates to the use of different fibre or fibre-like materials in food applications.

US 2003/165604 relates to β-glucan-containing fat and oil composition characterized by β-glucans extracted from a gramineous plant, which include cereals, such as rice, wheat, maize etc. There is no disclosure of using micronized cereal bran as such. **In** fact, the addition of bran is stated to be "problematical, easily causing reduction of taste and texture und uneven baking, which results in reduced commercial value."

US 2014/02595025 relates to a filling composition comprising a fat content above 20% by weight of the filling composition, a hydrolysed whole grain composition, and an alpha-amylase or fragment thereof, which shows no hydrolytic activity towards dietary fibres when in the active state. According to this disclosure, the whole grain is the entire edible part of a grain, i.e. the germ, the endosperm and the bran.

US 2003/0194473 relates to modifying dietary fibres by applying a shock wave to a dispersion of the fibres in a fluid carrier. There is no disclosure of fat-based fillings.

US 2015/0037469 discloses a method for producing a ready-to-eat biscuit comprising at least 29wt % wholegrain cereal flour, 5wt% to 22wt% fat, and at most 30wt% sugar relative to the total weight of the biscuit, wherein the slowly-digestible-starch-over-total-available-starch ratio of the biscuit is at least 31wt%. According to this disclosure, "biscuits made out from a dough comprising micronised bran do not have the typical appearance of a wholegrain product and do not meet the consumer's expectations". There is no disclosure of fat-based fillings.

US 2009/0155408 discloses a novel substitute for common salt NaCl. There is no disclosure of fat-based fillings.

RU 2579363C1 and SU 931138 are related to the preparation of bread. There is no disclosure of fat-based fillings.

US 5,356,644 discloses a low calorie fat substitute comprising an outer coating of a digestible fat surrounding an inner core of a low caloric or non-caloric material. There is also no disclosure of fat-based fillings.

Reducing the amount of sugar in a filling and replacing it with different ingredients is therefore a challenging task.

There is thus a need to provide a sugar replacement solution which does not have the disadvantages of the prior art mentioned above. The present invention addresses this need.

### SUMMARY OF THE INVENTION

The present invention relates to a fat-based filling comprising micronized wheat bran.

The present invention relates to a fat-based filling comprising:
- From 20 to 55wt%, preferably from 25 to 55wt%, more preferably from 30 to 50wt%, even more preferably from 35 to 45wt% of sugar, and
- From 20 to 60wt%, preferably from 25 to 60wt%, more preferably from 30 to 50wt%, even more preferably from 35 to 45wt% of fat, and
- From 1.5 to 20wt%, preferably from 1.5 to 15wt%, more preferably from 2 to 12wt%, even more preferably from 5 to 10wt%, most preferably from 5 to 8wt% of micronized wheat bran, and
wherein 90 wt-% of the micronized wheat bran has a particle size below 0.1 mm.

The present invention further relates to a process for preparing a fat-based filling comprising fat, sugar and micronized cereal bran, said process comprising the steps of:
a) Providing a blend comprising the sugar and the micronized cereal bran at a temperature of from 35 to 80°C, and
b) Adding part of the fat to the blend comprising sugar and micronized bran and mixing to obtain a cohesive mass, and
c) Optionally refining the mass to obtain particles having a particle size of 25µm or less to obtain flakes, and
d) Adding the remaining fat at a temperature of from 35 to 80°C under agitation and shear to obtain a homogeneous mass, and
wherein the micronized cereal bran is micronized wheat bran.

The present invention further relates to a food product comprising the fat-based filling of the present invention and further food ingredients.

The present invention further relates to the use of micronized cereal bran to reduce sugar in fat-based fillings, wherein the micronized bran is micronized wheat bran. Preferably, up to about 20%, preferably up to about 15%, more preferably up to about 10% in weight of sugar can be replaced by micronized wheat bran.

### DESCRIPTION

The inventors have found that micronized cereal bran, preferably micronized wheat bran, can be advantageously used to partly replace sugar in fat-based fillings. The invention therefore relates to a fat-based filling comprising micronized wheat bran, more particularly to a sugar reduced fat-based filling comprising micronized wheat bran. It is understood that sugar replacement refers to a reduced content in sugar in comparison to a fat-based filling where sugar has not been replaced by other ingredients.

For sugar replacement, part of the sugar is replaced by micronized cereal bran, preferably micronized wheat bran, which can lead to significant sugar reduction and calorie reduction. The resulting fat-based fillings have comparable functionalities as the full-sugar products in terms of flow properties, perceived sweetness and mouthfeel.

It is hypothesized that the micronized cereal bran particles, preferably micronized wheat bran particles, act as non-spherical particles where the rheological properties of the fat-based fillings, and in particular chocolate fillings (Casson yield stress and viscosity) are determined by shape factors (aspect ratio) of the particles, phase volume of the particles and orientation of the particles relative to the direction of the flow.

These factors would explain the fact that, when the micronized cereal bran, preferably micronized wheat bran, is used as sugar replacer, viscosity is comparable to the viscosity of the reference whereas yield value is different and higher than the reference, unless the filling is unrefined i.e. not roll-refined, in which case, the yield value is also comparable to the unrefined reference.

### Fat-based fillings

Fat-based fillings are based on two main ingredients, fat and sugar, and can contain several other ingredients including, but not limited to, cocoa powder, milk powder, whey powder, lactose, flavours, lecithin, colorants, etc. Fat-based fillings according to the invention comprise at least 20wt%, more preferably at least 25wt%, even more preferably at least 30wt%, most preferably at least 35wt% of fat. Fat-based fillings according to the invention comprise at least 20wt%, more preferably at least 25wt%, even more preferably at least 30wt%, most preferably at least 35wt% of sugar.

Fat-based fillings typically do not contain added water. Fat-based fillings typically have a water content of from 0.1wt% to 1.5wt%, preferably from 0.01wt% to 1wt%, more preferably from 0.01wt% to 0.5wt%. Said water is preferably substantially only coming from residual water content of the fat-based filling ingredients.

Fat-based fillings are used as filling material in different food applications. In the context of the present invention, it is understood that the fat-based filling may also be a spread, such as a chocolate spread or hazelnut spread for use for example with bread, pancakes and the like.

In particular, fat-based fillings for chocolate confectionery are used amongst others in filled chocolate products (chocolate bars, pralines, chocolate eggs ...), filled bakery products that can be enrobed with chocolate or not (sandwich cookies, filled wafers, pastry products).

A typical full sugar fat-based filling comprises
- From 30 to 70wt%, preferably from 35 to 60wt%, more preferably from 40 to 50wt% of sugar, and
- From 25 to 60wt%, preferably from 30 to 50wt%, more preferably from 35 to 45wt% of fat.

More specifically, distinction can be made between white fat-based fillings, brown fat-based fillings, hazelnut fat-based fillings.

White fat-based fillings are composed primarily of sugar and fat and may contain other ingredients like milk powder, flavours etc. A full sugar white fat-based filling typically comprises:
- From 30 to 70wt%, preferably from 35 to 60wt%, more preferably from 40 to 50wt% of sugar, and
- From 25 to 60wt%, preferably from 30 to 50wt%, more preferably from 35 to 45wt% of fat, and
- From 0 to 15wt%, preferably from 3 to 11wt%, more preferably from 5 to 10wt% of powdered milk products, and
- From 0.1 to 1wt%, preferably from 0.2 to 0.7wt%, more preferably from 0.3 to 0.5wt% lecithin.

Brown fat-based fillings are composed primarily of sugar and fat and may contain other ingredients like cocoa powders, milk powder, flavours etc. A full sugar brown fat-based filling typically comprises:
- From 30 to 70wt%, preferably from 35 to 60wt%, more preferably from 40 to 50wt% of sugar and
- From 25 to 60wt%, preferably from 30 to 50wt%, more preferably from 35 to 45wt% of fat, and
- From 2 to 15wt%, preferably from 4 to 10wt%, more preferably from 5 to 8wt% of cocoa powder, and
- From 0 to 15wt%, preferably from 3 to 11wt%, more preferably from 5 to 10wt% of powdered milk products and
- From 0.1 to 1wt%, preferably from 0.2 to 0.7wt%, more preferably from 0.3 to 0.5wt% of lecithin.

Hazelnut fat-based fillings are composed of sugar, fat and hazelnut paste and may contain other ingredients like cocoa powders, milk powder, flavours etc. A full sugar hazelnut fat-based filling typically comprises:
- From 30 to 70wt%, preferably from 35 to 60wt%, more preferably from 40 to 50wt% of sugar, and
- From 25 to 60wt%, preferably from 30 to 50wt%, more preferably from 35 to 45wt% of fat, and
- from 2 to 15wt%, preferably from 5 to 12wt%, more preferably from 6 to 10wt% of hazelnut paste, and
- From 2 to 15wt%, preferably from 4 to 10wt%, more preferably from 5 to 8wt% of cocoa powder, and
- From 0 to 15wt%, preferably from 3 to 11wt%, more preferably from 5 to 10wt% of powdered milk products, and
- From 0.1 to 1wt%, preferably from 0.2 to 0.7wt%, more preferably from 0.3 to 0.5wt% of lecithin.

It was found that micronized cereal bran, preferably micronized wheat bran, can be used in fat-based fillings to reduce sugar. Thus the present invention relates to the use of micronized wheat bran, to replace sugar in fat-based filling.

For sugar reduction, a part of the sugar can be replaced with micronized cereal bran, preferably micronized wheat bran, in the recipe. For example, in a filling containing 50wt% of sugar, between about 5wt% and about 15wt% of sugar can be replaced with micronized cereal bran, preferably micronized wheat bran, leading to respectively 10% to 30% sugar reduction in the end filling.

It was found that the sensorial properties of fillings made with micronized cereal bran, preferably micronized wheat bran, are similar to the sensorial properties of a reference filling. Replacement of sugar up to about 20%, preferably up to 15%, more preferably up to 10% in weight by micronized cereal bran, preferably micronized wheat bran, is possible with some cereal taste for inclusions close to 15%. Preferably micronized cereal bran, in particular micronized wheat bran, is used to replace from about 5% to about 10% in weight of sugar.

Thus, in any of the typical full sugar fillings mentioned above, the sugar can be replaced with micronized bran, preferably micronized wheat bran.

Thus the present invention relates to a fat-based filling comprising:
- From 20 to 55wt%, preferably from 25 to 55wt%, more preferably from 30 to 50wt%, most preferably from 35 to 45wt% of sugar, and
- From 20 to 60wt%, preferably from 25 to 60wt%, more preferably from 30 to 50wt%, most preferably from 35 to 45wt% of fat, and
- From 1.5 to 20wt%, preferably from 1.5 to 15wt%, more preferably from 2 to 12wt%, even more preferably from 5 to 10wt%, most preferably from 5 to 8wt% of micronized wheat bran, and
wherein 90 wt-% of the micronized wheat bran has a particle size below 0.1 mm.

Preferably, the present invention further comprises from 0.1 to 1wt%, preferably from 0.2 to 0.7wt%, more preferably from 0.3 to 0.5wt% lecithin.

In case the fat-based filling of the present invention is a white filling, it further preferably comprises from 0 to 15wt%, preferably from 1 to 15wt%, more preferably from 3 to 11wt%, even more preferably from 5 to 10wt% of powdered milk products.

In case the fat-based filling of the present invention is a brown filling, it further preferably comprises from 2 to 15wt%, preferably from 4 to 10wt%, more preferably from 5 to 8wt% of cocoa powder.

In case the fat-based filling of the present invention is a hazelnut-based filling, it further preferably comprises from 2 to 15wt%, preferably from 5 to 12wt%, more preferably from 6 to 10wt% of hazelnut paste.

Thus the present invention may also relate to a fat-based filling consisting essentially of sugar, fat, micronized wheat bran , and optionally one or more of lecithin, a powdered milk product(s), cocoa powder, hazelnut paste, flavour(s) and colorant(s). In particular, the fat-based filling according to the invention may consist essentially of:
- From 20 to 55wt%, preferably 25 to 55wt%, more preferably from 30 to 50wt%, most preferably from 35 to 45wt% of sugar, and
- From 20 to 60wt%, preferably 25 to 60wt%, more preferably from 30 to 50wt%, most preferably from 35 to 45wt% of fat, and
- From 1.5 to 20wt%, preferably from 1.5 to 15wt%, more preferably from 2 to 12wt%, even more preferably from 5 to 10wt%, most preferably from 5 to 8wt% of micronized wheat bran, and
- Optionally, from 0.1 to 1wt%, preferably from 0.2 to 0.7wt%, more preferably from 0.3 to 0.5wt% lecithin
- Optionally, from 0.1 to 15wt%, preferably from 1 to 15wt%, more preferably from 3 to 11wt%, even more preferably from 5 to 10wt% of powdered milk products, and
- Optionally, from 2 to 15wt%, preferably from 4 to 10wt%, more preferably from 5 to 8wt% of cocoa powder, and
- Optionally, 2 to 15wt%, preferably from 5 to 12wt%, more preferably from 6 to 10wt% of hazelnut paste
- Optionally, less than 1wt% of flavours such as vanilla extract or colorants.
wherein 90 wt-% of the micronized wheat bran has a particle size below 0.1 mm.

### Micronized cereal bran

The micronized bran can be selected from any cereal bran. Preferably, the cereal bran is wheat, oat, barley, corn, rice, rye, millet and the like. More preferably, the micronized bran is micronized wheat bran.

Wheat bran is defined as the milling fraction from wheat kernel containing pericarp, testa, aleurone layer, germ and part of the starchy endosperm.

Cereal bran can be milled to provide micronized cereal bran. Wheat bran is milled to provide micronized wheat bran. Milling reduces the particle size of the bran, preferably wheat bran. Milling has the advantage to improve the homogeneity of the final product. Final milled product has the appearance of flour, and in the case of wheat bran it has the appearance of wheat flour. Micronized bran (in particular micronized wheat bran) is therefore understood to be bran (in particular wheat bran) having a particle size below 1mm, preferably below 0.5mm, more preferably below 0.25mm. Preferably micronized bran (in particular micronized wheat bran) has 90wt% of the particles below 1mm, more preferably 90wt% of the particles below 0.5mm, even more preferably 90wt% of the particles below 0.25mm, most preferably 90wt% of the particles below 0.1mm.

The micronized cereal bran, preferably micronized wheat bran, can be heat treated according to processes known in the art, for example according to EP 2 677 875. Heat treatment can be carried out before or after milling.

In the fat-based fillings described in the present invention, the fat used may be a single component or a blend made with two or more components out of the following list: palm oil, palm fractions such as palm olein, palm stearin, palm superolein, palm superstearin, palm mid fractions, these fractions interesterified, coconut oil, coconut stearin, palm kernel oil, palm kernel stearin, cocoa butter, milk fat, shea butter, sunflower oil, rapeseed oil, soybean oil, speciality fillings interesterified fats and the like.

In the fat-based fillings described in the present invention, the powdered milk products are preferably selected from but not limited to skimmed milk powder, full fat milk powder, whey powder, lactose, skimmed yoghurt powder, full fat yoghurt powder, cream powder.

In the fat-based fillings described in the present invention, lecithin is obtained preferably either from sunflower, from rapeseed, or from soybean, preferably soybean is identity preserved soybean.

In the fat-based fillings described in the present invention, when present, cocoa powders to be used are preferably selected from: cocoa powders, fat reduced cocoa powders, natural or alkalized cocoa powders, cocoa liquors.

In the fat-based fillings described in the present invention, when present, different qualities of hazelnut pastes can be used: hazelnut pastes of different geographical origins, hazelnut pastes roasted to different degrees.

In the fat-based fillings described in the present invention, flavours may be added according to the desired taste profile.

In the fat-based fillings described in the present invention, one or more additional or alternative ingredients may be used either as functional ingredient (additional ingredient) and/or as a replacer of sugar (alternative ingredient). The one or more additional or alternative ingredients may be selected from any low calorie bulking agent or soluble dietary fibre. The one or more additional/alternative ingredients may be chosen from the following list, but are not limited to said list: native starch, modified or resistant starch, maltodextrins (including resistant maltodextrins), dried glucose syrup, dextrins (including resistant dextrins), polydextrose, inulin, fructooligosaccharides, polyols such as erythritol, low calorie sugars such as allulose and tagatose, low or zero calorie sweeteners, vegetable fibres, vegetable proteins and animal proteins.

The starch used may be selected from the group of native leguminous starch, native cereal starch, native root starch, native tuber starch, native fruit starch, modified leguminous starch, modified cereal starch, modified root starch, modified tuber starch, modified fruit starch, waxy type starches, high amylose starches and mixtures thereof. Actually, the starch can be derived from any native source, wherein native relates to the fact that said starch is found in nature. Typical sources for the starches are cereals, tubers, roots, legumes, fruit starches and hybrid starches. Suitable sources include corn, pea, potato, sweet potato, sorghum, banana, barley, wheat, rice, sago, amaranth, tapioca, arrowroot, canna, and waxy (containing at least about 95% by weight amylopectin) or high amylose (containing at least 40% by weight amylose) varieties thereof. Also suitable are starches derived from a plant obtained by breeding techniques including crossbreeding, translocation, inversion, transformation or any other method of gene or chromosome engineering to include variations thereof. In addition, starch derived from a plant grown from artificial mutations and variations of the above generic composition which may be produced by known standard methods of mutation breeding are also suitable herein.

Starches may be chemically modified and/or physically modified. These also include resistant starches.

Chemical modifications are intended to include without limitation crosslinked starches, acetylated and organically esterified starches, hydroxyethylated and hydroxypropylated starches, phosphorylated and inorganically esterified starches, cationic, anionic, oxidized starches, zwitterionic starches, and succinate and substituted succinate derivatives of starch and combinations thereof.

Physical modification may include thermal inhibition.

The maltodextrins may be maltodextrins having a Dextrose Equivalent (DE) between 1 and 19,9. Maltodextrin can be prepared by controlled acid or enzymatic hydrolysis of starch. The maltodextrin can be a resistant (or modified) maltodextrin.

The dried glucose syrups may have a DE of from 20 to 40. Glucose syrup can also be prepared by the controlled acid or enzymatic hydrolysis of starch.

Dextrins may be prepared according to the dextrinisation method. Dextrinisation is a heat treatment of dry starch in the presence or absence of acid. The dextrin can be a resistant (or modified) dextrin.

The vegetable fibres may originate from different botanical origins such as from corn, wheat, oat, barley, pea and the like.

The vegetable proteins may originate from different botanical origins such as from pea, soy, wheat, corn, potato and the like.

The animal proteins may be selected from dairy products, such as milk or whey, from egg, such as from egg white powder, from insect protein or from meat and fish sources.

The polydextrose can be prepared from the polycondensation of glucose in the presence of an acidifying catalyst and a polyol, such as sorbitol. The polydextrose can be prepared in a microreactor. As an example, the polydextrose may be prepared according to EP2528950.

Thus, the fat-based filling according to the invention may further comprise in addition to the micronized wheat bran from 1 to 75wt% of a further bulking agent or soluble dietary fibre, preferably 3 to 60wt%, more preferably 4 to 50wt%, yet more preferably 5 to 40wt%, even more preferably 6 to 30wt%, yet even more preferably 7 to 20wt%, most preferably 10 to 15wt% of said bulking agent or soluble dietary fibre. Most preferably the additional bulking agent is polydextrose.

Thus the present invention relates to a fat-based filling comprising:
- From 20 to 55wt%, preferably from 25 to 55wt%, more preferably 30 to 50wt%, most preferably from 35 to 45wt% of sugar, and
- From 20 to 60wt%, preferably from 25 to 60wt%, more preferably from 30 to 50wt%, most preferably from 35 to 45wt% of fat, and
- From 1.5 to 20wt%, preferably from 1.5 to 15wt%, more preferably from 2 to 12wt%, even more preferably from 5 to 10wt%, most preferably from 5 to 8wt% of micronized wheat bran, and
- From 1 to 75wt%, preferably 3 to 60wt%, more preferably 4 to 50wt%, yet more preferably 5 to 40wt%, even more preferably 6 to 30wt%, yet even more preferably 7 to 20wt%, most preferably 10 to 15wt% of a bulking agent or soluble dietary fibre in addition to the micronized wheat bran, and
wherein 90 wt-% of the micronized wheat bran has a particle size below 0.1 mm, and wherein the additional bulking agent is preferably polydextrose.

Surprisingly, it was found that when a bulking agent such as polydextrose, resistant maltodextrin, or resistant dextrin, is used in combination with micronized cereal bran (in particular micronized wheat bran) in roll-refined fat-based fillings, the yield value of the roll-refined filling decreases significantly.

Furthermore, the sugar content can be further reduced by using the combination of a micronized cereal bran, preferably micronized wheat bran, and a further bulking agent, preferably a polydextrose. For example, in a filling containing 50wt% of sugar, between about 5wt% and about 25wt% of sugar can be replaced with the combination of micronized cereal bran (such as micronized wheat bran) and a bulking agent (such as polydextrose) leading to respectively about 10% to about 50% sugar reduction in the end filling.

The present invention further relates to a process for preparing a fat-based filling comprising fat, sugar and micronized wheat bran, said process comprising the steps of:
a) Providing a blend of the sugar and the micronized wheat bran, preferably micronized wheat bran, at a temperature of from 35 to 80°C, and
b) Adding part of the fat to the blend of sugar and micronized bran and mixing to obtain a cohesive mass, and
c) Optionally refining the mass to obtain particles having a particle size of 25µm or less to obtain flakes, and
d) Adding the remaining fat at a temperature of from 35 to 80°C under mixing and shear to obtain a homogeneous mass.

In step a), blending may be done in a double jacketed mixer. The mixer can be kept at the right temperature by circulating water or oil. The temperature of step a) is from 35 to 80°C, preferably from 35 to 70°C, more preferably from 40 to 65°C, even more preferably from 45 to 60°C, yet even more preferably from 45 to 55°C.

When other dry ingredients are to be used, such as dry milk ingredients, cocoa ingredients, hazelnut paste and the like, these ingredients are added preferably also in step a) of the process.

In step b) part of the fat is added to the blend of step a). Preferably, the fat is melted before addition and preferably it is first heated to a temperature of from 35 to 80°C, more preferably from 35 to 70°C, even more preferably from 40 to 65°C, yet even more preferably from 45 to 60°C, yet even more preferably from 45 to 55°C. The objective being to have melted fat. Preferably the part of the fat added is half of the total fat of the filling. Preferably the fat is added in step b) slowly and under mixing.

In optional step c) the mass obtained in step b) is refined to obtain particles of which 90% have a particle size of 25µm or less, preferably of from 20 to 25µm. Refining may be done by using roll-refiner equipment, preferably a 3-roll refiner equipment, such as a Bühler 3-roll refiner. After the refining step, flakes are obtained.

Preferably the rolls of the roll-refiner equipment are set at a temperature of from 20 to 40°C, preferably of from 25 to 30°C. For a 3-roll refiner, preferably the first roll is set at 30°C, the second roll is set at 30°C and the third roll is set at 25°C.

Preferably the pressure between the rolls of the roll-refiner equipment is set from 16 bar to 19 bar. Typically, the roll-refiner equipment includes a scraper to remove the flakes from the rolls and scraper knife pressure may be set at a pressure of from 6 to 8 bar. Preferably further, the gap between rolls is as small as possible.

For some applications like sandwich cookies or filled wafers, fat-based fillings can also be produced without the refining step. In that case, the particle size ranges from 40 µm to 120 µm, preferably from 40 µm to 100 µm, more preferably from 40 µm to 70 µm, for 90% of the particles, depending on the ingredients used.

In step d), the rest of the fat is added and dispersed. Preferably step d) takes place at a temperature of from 35 to 80°C, preferably from 35 to 70°C, more preferably from 40 to 65°C, even more preferably from 45 to 60°C, yet even more preferably from 45 to 55°C. Preferably the fat is first heated at a temperature of from 35 to 80°C, preferably from 35 to 70°C, more preferably from 40 to 65°C, even more preferably from 45 to 60°C, yet even more preferably from 45 to 55°C. The fat is preferably added slowly and under mixing. Preferably mixing and shear is done for a minimum of 10 minutes, more preferably 15 minutes, even more preferably 20 minutes.

When lecithin is present, lecithin is added together with the rest of the fat in step d). Preferably lecithin is first dispersed in the remaining part of the fat before addition.

The filling thus produced may be used for further analysis: it is poured in measuring pots and cooled for 30 minutes at 10°C then kept at 20°C until measurement.

The filling thus produced may be used in food applications, for example in filled chocolate bars or filled pralines, in sandwich cookies or in filled wafers. As mentioned above, the filling may be used as a spread.

The functionalities and the properties of the fat-based fillings according to the present invention are measured and described as follows:

### Particle size

The fat-based filling of the present invention has preferably a particle size of 25µm or less, preferably from 20µm to 25µm or the fat-based filling has a particle size of from 40µm to 120µm, more preferably 40µm to 70µm, depending whether it has been refined during production or not. Particle size is measured with a microsizer. The particle size value given by the microsizer corresponds to the particle size value of 90% of the particles (D90).

### Texture

The fat-based filling of the present invention has a hardness of from 4000N to 8000N, preferably from 5000N to 8000N.

Texture is analysed by texture analysis (with a TAXT2 texture analyser), by compression using a cylinder of 20 mm of diameter. Measurements are done at 20°C. Single penetration of the cylinder probe of 10 mm in the filling at 5 mm/s. The hardness measured is the maximum force recorded. Evolution of hardness is measured over time, after preparation: 1 day, 7 days, 1 month, 6 months after preparation. Typical values of hardness measured for a reference filling are comprised between 4000N and 8000N, depending on the formulation and on the size of the particles (roll-refined filling or non-roll-refined filling).

### Viscosity and yield

The fat-based filling of the present invention has a viscosity of from 0.5 to 6 Pa.s, preferably 1 to 5, more preferably 1.5 to 3. Further, the fat-based filling of the present invention has a yield of from 2 to 25 Pa, preferably 4 to 15, more preferably 5 to 10. However, it should be noted, that the values of viscosity and yield value of fat-based fillings according to the present invention are depending on the formulation and on the size of the particles (roll-refined filling or not roll-refined filling) and may vary from the values mentioned above. Typical values of viscosity of a reference filling (i.e. fillings with no sugar reduction) range between 0.5 Pa.s and 3 Pa.s, preferably 0.5 Pa.s and 1.5 Pa.s. Typical values of yield value of a reference filling range between 3 and 10 Pa, preferably between 3 and 9 Pa.

Viscosity and yield value are measured on a rheometer in a cup-cylinder configuration. Measurements are made at 40°C. Spindle used: CC27 cylinder. Method used: IOCC - Casson method - rotational method at 40°C, shear rate: velocity gradient. The following steps are followed: pre-shear (60s / 5 s⁻¹), shear rate-ramp (180s / 2 to 50 s⁻¹), holding phase (60s / 50 s⁻¹), shear rate-ramp (180s / 50 to 2 s⁻¹). Viscosity and yield value are measured 1 week after preparation and 6 months after preparation.

All fillings are evaluated on sensorial properties at room temperature 1 week after preparation and storage at 20°C. The following parameters are assessed, with scores from 1 to 5:
- Texture: score 1 being attributed to soft and flowy fillings, score 5 to hard fillings
- Stickiness: score 1 being attributed to fillings melting away completely in the mouth, score 5 to fillings that stay in the mouth
- Sandiness: score 1 being attributed to grainy fillings, score 5 to smooth fillings
- Speed of melt: score 1 being attributed to slow melting fillings, score 5 to fillings melting very fast
- Sweetness intensity: score 1 being attributed to sweet fillings comparable to sugar based fillings, score 5 to fillings that are not sweet
- Moment of sweetness: score 1 being attributed fillings with an early flavour release, score 5 to fillings with a late flavour release
- Peak of sweetness: score 1 being attributed fillings with a burst in taste, score 5 to fillings with a continuous taste release
- Lasting of sweetness: score 1 being attributed fillings with a short taste release, score 5 to fillings with a long lasting flavour

It has further been found that the use of micronized cereal bran, preferably micronized wheat bran, has the advantage of enhancing flavour perception. It is believed, without being bound by theory, that the flat taste of micronized cereal bran, preferably micronized wheat bran, allows other ingredients such as flavours to come out more easily, eventually also less flavours might be needed.

The present invention further relates to a food composition comprising the fat-based filling of the present invention. The food product or composition can comprise the fat-based filling according to the invention and further food ingredients.

The food composition may be a bakery product, an ice cream, a confectionery product and the like. The bakery product may be a wafer, sandwich cookie, pastry, muffin, cake, sponge cake and the like. The ice cream may comprise the fat-based filling as a coating and/or as an inclusion for example. The confectionery product is preferably a chocolate or chocolate-like product such as a chocolate filling, a pillow breakfast cereal filling, a chocolate bar, a praline, a bonbon, a toffee and the like.

The confectionery product may also be a chocolate filling i.e. having at least 5wt% of cocoa powder. In such an application, the fat-based filling may have a higher weight percent of micronized cereal bran (preferably micronized wheat bran), i.e. from 1.5 to 20wt%, preferably from 5 to 20wt%, more preferably from 10 to 20wt%, most preferably from 15 to 20wt% of micronized bran, based on the weight percent of the fat-based filling. The higher the cocoa powder concentration (i.e. the darker the chocolate), the more micronized cereal bran, preferably micronized wheat bran, can be added without affecting taste and perceived sweetness.

The present invention will be illustrated with the following non-limiting examples.

### EXAMPLES

### Example 1

Two fillings are produced following the method described above. The first filling is a reference filling, with no sugar reduction (Reference Filling). In the second filling (MWB Filling), the sugar content is reduced compared to the reference filling, micronized wheat bran being used as (partial) replacement of the sugar (hence 20% sugar reduction in the filling). Both fillings are roll-refined to obtain particles with a diameter comprised between 20 µm and 25 µm as measured with a microsizer.

Recipes of these two fillings are provided in Table 1 hereunder, quantities are expressed as % in weight (wt%).

**Table 1**

| **Ingredient** | **Reference Filling** | **MWB Filling** |
|---|---|---|
| Specialty filling fat (Cremoflex F303) | 34 | 34 |
| IP soybean lecithin | 0,3 | 0,3 |
| Powdered sugar | 50 | 40 |
| Micronized wheat bran | 0 | 10 |
| Cocoa powder | 8 | 8 |
| Whey powder | 7,5 | 7,5 |
| Vanilla extract | 0,2 | 0,2 |

The fillings are produced as follows:
All solid materials (powdered sugar, micronized wheat bran, cocoa powder, whey powder) are blended and put in a double-jacketed mixer set at 50°C. Fat is melted down and kept at 50°C. About half of the fat is slowly added to the powders under agitation, to obtain a cohesive mass with a dry feeling. This mass is brought on a Bühler 3-roll refiner to refine to particles with size comprised between 20 µm and 25 µm as measured with a microsizer in order to obtain flakes. Following parameters are used: temperatures of the rolls are 30°C for the first roll, 30°C for the second roll, 25°C for the third roll; pressure between rolls is set between 16 bar and 19 bar; scraper knife pressure around 6-8 bar; gap between rolls: as small as possible. The flakes are put back in the double-jacketed mixer set at 50°C. Lecithin is added to the rest of the melted fat and dispersed therein to form a blend. This blend is slowly added to the flakes under agitation and shear for a minimum of 20 minutes, to obtain a homogeneous and flowy mass.

All fillings are evaluated on sensorial properties at room temperature 1 week after preparation and storage at 20°C. The following parameters are assessed, with scores from 1 to 5:
- Texture: score 1 being attributed to soft and flowy fillings, score 5 to hard fillings
- Stickiness: score 1 being attributed to fillings melting away completely in the mouth, score 5 to fillings that stay in the mouth
- Sandiness: score 1 being attributed to grainy fillings, score 5 to smooth fillings
- Speed of melt: score 1 being attributed to slow melting fillings, score 5 to fillings melting very fast
- Sweetness intensity: score 1 being attributed to sweet fillings comparable to sugar based fillings, score 5 to fillings that are not sweet
- Moment of sweetness: score 1 being attributed fillings with an early flavour release, score 5 to fillings with a late flavour release
- Peak of sweetness: score 1 being attributed fillings with a burst in taste, score 5 to fillings with a continuous taste release
- Lasting of sweetness: score 1 being attributed fillings with a short taste release, score 5 to fillings with a long lasting flavour

Sensorial analysis as described above brings the following observations:
- The MWB Filling is slightly softer than the Reference Filling: the reference filling scores 4 and the MWB based filling scores 3.
- Both fillings are comparably non-sticky: both fillings score 2, both fillings melting almost completely away in the mouth.
- For sandiness, the Reference Filling scores 5 (smooth filling), the MWB Filling scores 4, as some particles can be perceived.
- For speed of melt, the Reference Filling scores 2 while the MWB Filling scores 3, thus melting faster than the reference.
- For flavour release, both fillings are comparable and score the same on 4 different parameters: sweetness intensity, moment of sweetness, peak of sweetness, lasting of sweetness. Both products being intermediate in sweetness intensity, giving late and continuous sweetness release, and with sweet taste lasting long. The same sweetness intensity is described by the tasters for both fillings, sweetness being described as intermediate. When tasted the sweetness develops slowly in both fillings and reaches a maximum after several seconds in the mouth. The sweetness perceived in both fillings lasts for several seconds, i.e. a relatively long time, in the mouth and is continuous in the sense that sweetness does not fade quickly.

It can be concluded that micronized wheat bran can be advantageously used to significantly reduce sugar in a fat-based filling while the sensorial properties are comparable to the sensorial properties of a reference filling. In particular it was completely unexpected that the perceived sweetness in the filling of the present invention was comparable to the reference filling, despite a significant sugar reduction of 20%, as micronized wheat bran is not perceived as having any significant inherent sweetness by itself.

The Reference Filling has a hardness of 6900 ± 300 N (as measured 1 day after production with the method described above). The hardness of the MWB filling is 7250 ± 150 N (as measured 1 day after production with the method described above). Sugar replacement with micronized wheat bran has a limited effect on the hardness of the filling.

The Reference Filling has a viscosity at 40°C (as measured with the method described above) of 0,79 Pa.s and the yield value at 40°C (as measured with the method described above) is 4,35 Pa. The MWB Filling has the following physical characteristics: the viscosity at 40°C (as measured with the method described above) is 1,06 Pa.s, the yield value at 40°C (as measured with the method described above) is 23,58 Pa. The effect of sugar replacement by micronized wheat bran on rheological properties is significant with respect to the yield value for roll-refined fat-based fillings. This may be corrected by the use of alternative or additional emulsifiers: e.g. the addition of 0.02% of PGPR (polyglycerol polyricinolate) reduces significantly the yield value of the filling comprising micronized wheat bran to a value comparable to the one of the reference filling, without affecting the other parameters.

### Example 2

This example differs from example 1 in that the fillings are not roll-refined, therefore, the particles have a diameter of from 45 µm to 55 µm (as measured with a microsizer). These fillings have a somewhat sandy mouthfeel due to the fact that the bigger particles can be perceived.

Two fillings are produced following the method described above, except that the paste (or mass) is not refined on the Bühler 3-roll refiner and the melted fat is added stepwise to the initial blend of powders, then lecithin is added to the formed mass after the addition of the fat. The first filling (Reference Filling 2) is a typical fat-based filling, which has the standard amount of sugar i.e. no sugar reduction. In the second filling (MWB Filling 2), the sugar content is decreased compared to the reference, micronized wheat bran being used as the replacement (hence 20% sugar reduction in the filling).

Recipes of these two fillings are described in Table 2 hereunder, quantities are expressed as % in weight (wt%).

**Table 2**

| **Ingredient** | **Reference Filling 2** | **MWB Filling 2** |
|---|---|---|
| Specialty filling fat (Cremoflex F303) | 34 | 34 |
| IP soybean lecithin | 0,3 | 0,3 |
| Powdered sugar | 50 | 40 |
| Micronized wheat bran | 0 | 10 |
| Cocoa powder | 8 | 8 |
| Whey powder | 7,5 | 7,5 |
| Vanilla extract | 0,2 | 0,2 |

The fillings are produced as mentioned in example 1, but without the refining step on the Bühler 3-roll refiner.

Both fillings were evaluated for sensorial properties focusing on the following parameters:
- Sweetness intensity: score 1 being attributed to sweet fillings comparable to sugar based fillings, score 5 to fillings that are not sweet
- Speed of melt: score 1 being attributed to slow melting fillings, score 5 to fillings melting very fast
- Stickiness: score 1 being attributed to fillings melting away completely in the mouth, score 5 to fillings that stay in the mouth
- Presence or absence of aftertaste

Following observations are made:
- The MWB Filling 2 is slightly less sweet that the Reference Filling 2: the MWB filling scores at 2, the reference filling scores at 1.
- The MWB Filling 2 melts slower than the Reference Filling 2: when the reference filling scores at 4, the MWB filling has a score of 3
- The MWB Filling 2 is a bit stickier than the Reference Filling 2: while the reference filling scores at 2, the MWB filling scores at 3
- Compared to the Reference filling 2, the MWB Filling 2 has a slight aftertaste

The rheological properties are measured 1 week after production of the fillings. The Reference Filling 2 has a viscosity at 40°C (as measured with the method described above) of 1,93 Pa.s and the yield value at 40°C (as measured with the method described above) of 0,02 Pa. The MWB Filling 2 has the following physical characteristics: the viscosity at 40°C (as measured with the method described above) is 2,95 Pa.s, and the yield value at 40°C (as measured with the method described above) is 0,09 Pa. The effect of sugar replacement by micronized wheat bran on rheological properties is surprisingly limited with respect to the yield value in the case of non roll-refined fat-based fillings.

As for example 1, there was an unexpected comparable level of sweetness of the fillings despite the 20% reduction of sugar in MWB Filling 2. It was furthermore surprising that the rheological properties of the unrefined filling according to the invention did not change significantly in comparison to the Reference Filling 2. The changes in both viscosity *and* in yield value were limited in the unrefined filling despite the replacement of 20% of sugar with micronized wheat bran, whereas in the refined MWB Filling in example 1 only the viscosity remained substantially unchanged.

### Example 3

Two fillings are produced following the method described above. The first filling is a reference filling, with no sugar reduction (Reference Filling 3). In the second filling (Sugar Reduced Filling), the sugar content is reduced compared to the Reference Filling 3. Micronized wheat bran and a commercially available polydextrose are used for the replacement of sugar (hence 50% sugar reduction in the filling). Both fillings are roll-refined to obtain particles with a diameter comprised between 20 µm and 25 µm as measured with a microsizer.

Recipes of these two fillings are provided in Table 3 hereunder, quantities are expressed as % in weight (wt%).

**Table 3**

| **Ingredient** | **Reference Filling 3** | **Sugar Reduced Filling** |
|---|---|---|
| Specialty filling fat (Cremoflex F303) | 34 | 34 |
| IP soybean lecithin | 0,3 | 0,3 |
| Powdered sugar | 50 | 25 |
| Micronized wheat bran | 0 | 10 |
| Polydextrose | 0 | 15 |
| Cocoa powder | 8 | 8 |
| Whey powder | 7,5 | 7,5 |
| Vanilla extract | 0,2 | 0,2 |

The fillings are produced following the method described in example 1 with the refining step on the Bühler 3-roll refiner.

All fillings are evaluated for sensorial properties at room temperature 1 week after preparation and storage at 20°C. The following parameters are assessed, with scores from 1 to 5:

Both fillings were evaluated on sensorial properties focusing on the following parameters:
- Sweetness intensity: score 1 being attributed to sweet fillings comparable to sugar based fillings, score 5 to fillings that are not sweet
- Speed of melt: score 1 being attributed to slow melting fillings, score 5 to fillings melting very fast
- Stickiness: score 1 being attributed to fillings melting away completely in the mouth, score 5 to fillings that stay in the mouth
- Presence or absence of aftertaste

Surprisingly, the Sugar Reduced Filling is very close to the Reference Filling 3. Following observations are made:
- The Sugar Reduced Filling is perceived to be as sweet as Reference Filling 3: both fillings score at 1
- The Sugar Reduced Filling melts at the same speed than the Reference Filling 3: both fillings score 1 or 2
- The Sugar Reduced Filling is not stickier than the Reference Filling 3: both fillings score at 2
- Compared to Reference Filling 3, the Sugar Reduced Filling has a slight aftertaste

It can be concluded that micronized wheat bran can be advantageously combined with polydextrose to significantly reduce sugar in a fat-based filling while the sensorial properties are comparable to the sensorial properties of the reference full-sugar filling. In particular it was completely unexpected that the perceived sweetness in the filling of the present invention was comparable to the reference filling, despite a significant sugar reduction of 50%, as micronized wheat bran and polydextrose are not perceived as having any significant inherent sweetness by themselves.

The Reference Filling 3 has a hardness of 5400 ± 200 N (as measured 1 week after production with the method described above). The hardness the Sugar Reduced filling is 4750 ± 50 N (as measured 1 week after production with the method described above). Sugar replacement with micronized wheat bran together with polydextrose thus has a limited effect on the hardness of the filling.

The Reference Filling 3 has a viscosity at 40°C (as measured with the method described above) of 0,81 Pa.s and the yield value at 40°C (as measured with the method described above) is 5,05 Pa. The Sugar Reduced Filling has the following physical characteristics: the viscosity at 40°C (as measured with the method described above) is 0,89 Pa.s, and the yield value at 40°C (as measured with the method described above) is 5,35 Pa. Thus the effect of sugar replacement by micronized wheat bran combined with polydextrose on the yield value for roll-refined fat-based fillings is surprisingly significantly less than when micronized wheat bran is used alone, as in example 1.

## Claims

1. A fat-based filling **characterized in that** it comprises
- from 20 to 55wt%, preferably from 25 to 55wt%, more preferably 30 to 50wt%, most preferably from 35 to 45wt% of sugar, and
- from 20 to 60wt%, preferably from 25 to 60wt%, more preferably from 30 to 50wt%, most preferably from 35 to 45wt% of fat, and
- from 1.5 to 20wt%, preferably from 1.5 to 15wt%, more preferably from 2 to 12wt%, even more preferably from 5 to 10wt%, most preferably from 5 to 8wt% of micronized wheat bran; and
wherein 90 wt-% of the micronized wheat bran has a particle size below 0.1mm.

2. The fat-based filling according to any one of the preceding claims **characterized in that** it further comprises from 0.1 to 1wt%, preferably from 0.2 to 0.7wt%, more preferably from 0.3 to 0.5wt% lecithin.

3. The fat-based filling according to any one of the preceding claims **characterized in that** it further comprises from 0 to 15wt%, preferably 0.1 to 15wt%, more preferably from 3 to 11wt%, even more preferably from 5 to 10wt% of powdered milk products.

4. The fat-based filling according to any one of the preceding claims **characterized in that** it further comprises
- from 2 to 15wt%, preferably from 4 to 10wt%, more preferably from 5 to 8wt% of cocoa powder, and/or
- from 2 to 15wt%, preferably from 5 to 12wt%, more preferably from 6 to 10wt% of hazelnut paste.

5. The fat-based filling according to any one of the preceding claims **characterized in that** the filling further comprises one or more ingredients selected from native starch, modified or resistant starch, maltodextrins, resistant maltodextrins, dried glucose syrup, dextrins, resistant dextrins, polydextrose, inulin, fructooligosaccharides, polyols such as erythritol, low calorie sugars such as allulose and tagatose, low or zero calorie sweeteners, vegetable fibres, vegetable proteins and animal proteins.

6. The fat-based filling according to claim 5 **characterized in that** the filling comprises in addition to the micronized wheat bran one or more bulking agents.

7. The fat-based filling according to claim 6 **characterized in that** the one or more bulking agents are selected from polydextrose and/or resistant maltodextrin and/or resistant dextrin.

8. A process for preparing a fat-based filling comprising fat, sugar and micronized cereal bran, said process comprising the steps of:
a) Providing a blend of the sugar and the micronized cereal bran at a temperature of from 35 to 80°C, and
b) Adding part of the fat to the blend of sugar and micronized cereal bran and mixing to obtain a cohesive mass, and
c) Optionally refining the mass to obtain particles wherein 90% of the particles have a particle size (D90) of 25µm or less to obtain flakes, and
d) Adding the remaining fat at a temperature of from 35 to 80°C under agitation and shear to obtain a homogeneous mass, and
wherein the micronized cereal bran is micronized wheat bran.

9. The process according to claim 8 for preparing a fat-based filling according to any one of claims 1 to 7.

10. Use of the fat-based filling according to claims 1 to 7 in a food product, wherein said food product is a bakery product, an ice cream or a confectionery product.

11. The use according to claim 10, wherein said food product is a wafer, sandwich cookie, sandwich cookie filling, pastry, muffin, cake, sponge cake, chocolate, chocolate filling or praline.

12. The use according to claim 11, wherein the food product is a chocolate filling having at least 5wt% of cocoa powder.

13. The use of micronized wheat bran to reduce sugar in fat-based fillings, thereby comprising:
- from 20 to 55wt%, preferably from 25 to 55wt%, more preferably 30 to 50wt%, most preferably from 35 to 45wt% of sugar, and
- from 20 to 60wt%, preferably from 25 to 60wt%, more preferably from 30 to 50wt%, most preferably from 35 to 45wt% of fat, and
- from 1.5 to 20wt%, preferably from 1.5 to 15wt%, more preferably from 2 to 12wt%, even more preferably from 5 to 10wt%, most preferably from 5 to 8wt% of micronized wheat bran; and
wherein 90% of the micronized wheat bran has a particle size below 0.1mm.

14. A food product comprising the fat-based filling of any of claims 1 to 7 as a coating, inclusion or filling, wherein said food product is a bakery product, an ice cream or a confectionery product, optionally wherein the food product is a wafer, sandwich cookie, sandwich cookie filling, pastry, muffin, cake, sponge cake, chocolate, chocolate filling or praline.

15. A food product according to claim 14, wherein the food product is chocolate filling having at least 5wt% of cocoa powder

## Patentansprüche

1. Fettbasierte Füllung, **dadurch gekennzeichnet, dass** sie umfasst
- von zu 20 bis 55 Gew.-%, vorzugsweise von zu 25 bis 55 Gew.-%, mehr bevorzugt zu 30 bis 50 Gew.-%, am meisten bevorzugt von zu 35 bis 45 Gew.-% Zucker, und
- von zu 20 bis 60 Gew.-%, vorzugsweise von zu 25 bis 60 Gew.-%, mehr bevorzugt von zu 30 bis 50 Gew.-%, am meisten bevorzugt von zu 35 bis 45 Gew.-% Fett und
- von zu 1,5 bis 20 Gew.-%, vorzugsweise von zu 1,5 bis 15 Gew.-%, mehr bevorzugt von zu 2 bis 12 Gew.-%, noch mehr bevorzugt von zu 5 bis 10 Gew.-%, am meisten bevorzugt von zu 5 bis 8 Gew.-% mikronisierte Weizenkleie; und
wobei zu 90 Gew.-% der mikronisierten Weizenkleie eine Teilchengröße unter 0,1 mm aufweisen.

2. Fettbasierte Füllung nach einem der vorstehenden Ansprüche, **dadurch gekennzeichnet, dass** sie ferner von zu 0,1 bis 1 Gew.-%, vorzugsweise von zu 0,2 bis 0,7 Gew.-%, mehr bevorzugt von zu 0,3 bis 0,5 Gew.-% Lecithin umfasst.

3. Fettbasierte Füllung nach einem der vorstehenden Ansprüche, **dadurch gekennzeichnet, dass** sie ferner von zu 0 bis 15 Gew.-%, vorzugsweise von zu 0,1 bis 15 Gew.-%, mehr bevorzugt von zu 3 bis 11 Gew.-%, noch mehr bevorzugt von zu 5 bis 10 Gew.-% Milchpulverprodukte umfasst.

4. Fettbasierte Füllung nach einem der vorstehenden Ansprüche, **dadurch gekennzeichnet, dass** sie umfasst
- von zu 2 bis 15 Gew.-%, vorzugsweise von zu 4 bis 10 Gew.-%, mehr bevorzugt von zu 5 bis 8 Gew.-% Kakaopulver und/oder
- von zu 2 bis 15 Gew.-%, vorzugsweise von zu 5 bis 12 Gew.-%, mehr bevorzugt von zu 6 bis 10 Gew.-% Haselnusspaste.

5. Fettbasierte Füllung nach einem der vorstehenden Ansprüche, **dadurch gekennzeichnet, dass** die Füllung ferner einen oder mehrere Inhaltsstoffe umfasst, ausgewählt aus nativer Stärke, modifizierter oder resistenter Stärke, Maltodextrinen, resistenten Maltodextrinen, getrocknetem Glucosesirup, Dextrinen, resistenten Dextrinen, Polydextrose, Inulin, Fructooligosacchariden, Polyolen wie Erythritol, kalorienarmen Zuckern wie Allulose und Tagatose, kalorienarmen oder kalorienfreien Süßstoffen, pflanzlichen Fasern, pflanzlichen Proteinen und tierischen Proteinen.

6. Fettbasierte Füllung nach Anspruch 5, **dadurch gekennzeichnet, dass** die Füllung zusätzlich zu der mikronisierten Weizenkleie ein oder mehrere Füllstoffe umfasst.

7. Fettbasierte Füllung nach Anspruch 6, **dadurch gekennzeichnet, dass** der eine oder die mehreren Füllstoffe aus Polydextrose und/oder resistentem Maltodextrin und/oder resistentem Dextrin ausgewählt sind.

8. Verfahren zum Herstellen einer fettbasierten Füllung, umfassend Fett, Zucker und mikronisierte Getreidekleie, das Verfahren umfassend die Schritte:
a) Bereitstellen einer Mischung aus dem Zucker und der mikronisierten Getreidekleie bei einer Temperatur von 35 bis 80 °C, und
b) Zugeben eines Teils des Fetts zu der Mischung aus Zucker und mikronisierter Getreidekleie und Vermischen, um eine kohäsive Masse zu erhalten, und
c) wahlweise Raffinieren der Masse, um Teilchen zu erhalten, wobei 90 % der Teilchen eine Teilchengröße (D90) von 25 µm oder weniger aufweisen, um Flocken zu erhalten, und
d) Zugeben des verbleibenden Fetts bei einer Temperatur von 35 bis 80 °C unter Rühren und Scherung, um eine homogene Masse zu erhalten, und
wobei die mikronisierte Getreidekleie mikronisierte Weizenkleie ist.

9. Verfahren nach Anspruch 8 zum Herstellen einer fettbasierten Füllung nach einem der Ansprüche 1 bis 7.

10. Verwendung der fettbasierten Füllung nach den Ansprüchen 1 bis 7 in einem Lebensmittelprodukt, wobei das Lebensmittelprodukt ein Backwarenprodukt, ein Speiseeis oder ein Süßwarenprodukt ist.

11. Verwendung nach Anspruch 10, wobei das Lebensmittelprodukt eine Waffel, ein Sandwich-Keks, eine Sandwich-Keks-Füllung, ein Gebäck, ein Muffin, ein Kuchen, ein Biskuitkuchen, Schokolade, eine Schokoladenfüllung oder eine Praline ist.

12. Verwendung nach Anspruch 11, wobei das Lebensmittelprodukt eine Schokoladenfüllung ist, die mindestens zu 5 Gew.-% Kakaopulver aufweist.

13. Verwendung von mikronisierter Weizenkleie, um Zucker in fettbasierten Füllungen zu reduzieren, dadurch umfassend:
- von zu 20 bis 55 Gew.-%, vorzugsweise von zu 25 bis 55 Gew.-%, mehr bevorzugt zu 30 bis 50 Gew.-%, am meisten bevorzugt von zu 35 bis 45 Gew.-% Zucker, und
- von zu 20 bis 60 Gew.-%, vorzugsweise von zu 25 bis 60 Gew.-%, mehr bevorzugt von zu 30 bis 50 Gew.-%, am meisten bevorzugt von zu 35 bis 45 Gew.-% Fett und
- von zu 1,5 bis 20 Gew.-%, vorzugsweise von zu 1,5 bis 15 Gew.-%, mehr bevorzugt von zu 2 bis 12 Gew.-%, noch mehr bevorzugt von zu 5 bis 10 Gew.-%, am meisten bevorzugt von zu 5 bis 8 Gew.-% mikronisierte Weizenkleie; und
wobei zu 90 % der mikronisierten Weizenkleie eine Teilchengröße unter 0,1 mm aufweist.

14. Lebensmittelprodukt, umfassend die fettbasierte Füllung nach einem der Ansprüche 1 bis 7 als Beschichtung, Einschluss oder Füllung, wobei das Lebensmittelprodukt ein Backwarenprodukt, ein Speiseeis oder ein Süßwarenprodukt ist, optional wobei das Lebensmittelprodukt eine Waffel, ein Sandwich-Keks, eine Sandwich-Keks-Füllung, ein Gebäck, ein Muffin, ein Kuchen, ein Biskuitkuchen, Schokolade, eine Schokoladenfüllung oder eine Praline ist.

15. Lebensmittelprodukt nach Anspruch 14, wobei das Lebensmittelprodukt eine Schokoladenfüllung ist, die mindestens zu 5 Gew.-% Kakaopulver aufweist

## Revendications

1. Garniture à base de matière grasse, **caractérisée en ce qu'**elle comprend
- 20 à 55 % en poids, de préférence 25 à 55 % en poids, plus préférablement 30 à 50 % en poids, le plus préférablement 35 à 45 % en poids de sucre, et
- 20 à 60 % en poids, de préférence 25 à 60 % en poids, plus préférablement 30 à 50 % en poids, le plus préférablement 35 à 45 % en poids de matière grasse, et
- 1,5 à 20 % en poids, de préférence 1,5 à 15 % en poids, plus préférablement 2 à 12 % en poids, encore plus préférablement 5 à 10 % en poids, le plus préférablement 5 à 8 % en poids de son de blé micronisé ; et
dans lequel 90 % en poids du son de blé micronisé a une taille de particules inférieure à 0,1 mm.

2. Garniture à base de matière grasse selon l'une quelconque des revendications précédentes, **caractérisée en ce qu'**elle comprend en outre 0,1 à 1 % en poids, de préférence 0,2 à 0,7 % en poids, plus préférablement 0,3 à 0,5 % en poids de lécithine.

3. Garniture à base de matière grasse selon l'une quelconque des revendications précédentes, **caractérisée en ce qu'**elle comprend en outre 0 à 15 % en poids, de préférence 0,1 à 15 % en poids, plus préférablement 3 à 11 % en poids, encore plus préférablement 5 à 10 % en poids de produits laitiers en poudre.

4. Garniture à base de matière grasse selon l'une quelconque des revendications précédentes, **caractérisée en ce qu'**elle comprend en outre
- 2 à 15 % en poids, de préférence 4 à 10 % en poids, plus préférablement 5 à 8 % en poids de poudre de cacao, et/ou
- 2 à 15 % en poids, de préférence 5 à 12 % en poids, plus préférablement 6 à 10 % en poids de pâte de noisette.

5. Garniture à base de matière grasse selon l'une quelconque des revendications précédentes, **caractérisée en ce que** la garniture comprend en outre un ou plusieurs ingrédients choisis parmi amidon natif, amidon modifié ou résistant, maltodextrines, maltodextrines résistantes, sirop de glucose déshydraté, dextrines, dextrines résistantes, polydextrose, inuline, fructo-oligosaccharides, polyols tels qu'érythritol, sucres hypocaloriques tels qu'allulose et tagatose, édulcorants hypocaloriques ou non caloriques, fibres végétales, protéines végétales et protéines animales.

6. Garniture à base de matière grasse selon la revendication 5, **caractérisée en ce que** la garniture comprend, en plus du son de blé micronisé, un ou plusieurs agents gonflants.

7. Garniture à base de matière grasse selon la revendication 6, **caractérisée en ce que** le ou les agents gonflants sont choisis parmi polydextrose et/ou maltodextrine résistante et/ou dextrine résistante.

8. Procédé pour la préparation d'une garniture à base de matière grasse comprenant matière grasse, sucre et son de céréales micronisé, ledit procédé comprenant les étapes consistant à :
a) fournir un mélange de sucre et de son de céréales micronisé à une température allant de 35 à 80 °C, et
b) ajouter une partie de la matière grasse au mélange de sucre et de son de céréales micronisé et mélanger pour obtenir une masse cohésive, et
c) éventuellement, raffiner la masse pour obtenir des particules, dans lequel 90 % des particules ont une taille de particules (D90) de 25 µm ou moins pour obtenir des flocons, et
d) ajouter la matière grasse restante à une température allant de 35 à 80 °C sous agitation et cisaillement pour obtenir une masse homogène, et
dans lequel le son de céréales micronisé est du son de blé micronisé.

9. Procédé selon la revendication 8 pour la préparation d'une garniture à base de matière grasse selon l'une quelconque des revendications 1 à 7.

10. Utilisation de la garniture à base de matière grasse selon les revendications 1 à 7 dans un produit alimentaire, dans lequel ledit produit alimentaire est un produit de boulangerie, une crème glacée ou un produit de confiserie.

11. Utilisation selon la revendication 10, dans laquelle ledit produit alimentaire est une gaufre, un biscuit fourré, une garniture de biscuit fourré, une pâtisserie, un muffin, un gâteau, un biscuit de Savoie, du chocolat, une garniture au chocolat ou une praline.

12. Utilisation selon la revendication 11, dans laquelle le produit alimentaire est une garniture au chocolat ayant au moins 5 % en poids de poudre de cacao.

13. Utilisation de son de blé micronisé pour réduire le sucre dans les garnitures à base de matière grasse, comprenant ainsi :
- 20 à 55 % en poids, de préférence 25 à 55 % en poids, plus préférablement 30 à 50 % en poids, le plus préférablement 35 à 45 % en poids de sucre, et
- 20 à 60 % en poids, de préférence 25 à 60 % en poids, plus préférablement 30 à 50 % en poids, le plus préférablement 35 à 45 % en poids de matière grasse, et
- 1,5 à 20 % en poids, de préférence 1,5 à 15 % en poids, plus préférablement 2 à 12 % en poids, encore plus préférablement 5 à 10 % en poids, le plus préférablement 5 à 8 % en poids de son de blé micronisé ; et
dans laquelle 90 % du son de blé micronisé a une taille de particules inférieure à 0,1 mm.

14. Produit alimentaire comprenant la garniture à base de matière grasse selon l'une quelconque des revendications 1 à 7 en tant qu'enrobage, inclusion ou garniture, dans lequel ledit produit alimentaire est un produit de boulangerie, une crème glacée ou un produit de confiserie, éventuellement dans lequel le produit alimentaire est une gaufre, un biscuit fourré, une garniture de biscuit fourré, une pâtisserie, un muffin, un gâteau, un biscuit de Savoie, du chocolat, une garniture au chocolat ou une praline.

15. Produit alimentaire selon la revendication 14, dans lequel le produit alimentaire est une garniture au chocolat ayant au moins 5 % en poids de poudre de cacao.
